# EUROPEAN PATENT SPECIFICATION

(11) **EP 3 627 247 B1**
(45) Date of publication and mention of the grant of the patent: **05.04.2023**
(21) Application number: 18195299.5
(22) Date of filing: 18.09.2018
(51) Int. Cl.: G05B 19/042

(54) **CONTROL ARCHITECTURE FOR A VEHICLE**
STEUERUNGSARCHITEKTUR FÜR EIN FAHRZEUG
ARCHITECTURE DE COMMANDE POUR VÉHICULE

(43) Date of publication of application: 25.03.2020
(73) Proprietor: KNORR-BREMSE Systeme für Nutzfahrzeuge GmbH, 80809 München (DE)
(72) Inventor: Széll, Péter, 1163 Budapest (HU); Németh, Huba, 1116 Budapest (HU); Rapp, Tamás, 8229 Csopak (HU); Kokrehel, Csaba, 1119 Budapest (HU)
(74) Representative: Maiwald GmbH

(56) References cited:
- EP-A1- 2 717 108
- US-A1- 2005 160 301
- US-A1- 2010 146 174
- US-A1- 2011 276 199

## Description

### FIELD OF THE INVENTION

The present invention relates to a control architecture for a vehicle, and a control method for a control architecture of a vehicle.

### BACKGROUND OF THE INVENTION

Redundant control architecture is a common solution for safety relevant application to reduce failure rates and thus improving safety level. Due to the spread of AD (Automated Driving) applications, redundant control architecture is widely used for different functions (e.g. environment sensing, perception, behaviour planning, track planning, control of actuators, etc.) to achieve targeted safety level. However, in the application of redundant control architecture the determination and signalization of master-slave role of controllers arises.

US2011/276199A1 describes a flight control system for an aircraft, in which control commands are transmitted between a flight control module and at least one actuator of a movable flight surface, the flight control module comprising at least one first and one second computer, each computer being adapted for computing, for each actuator, a control command established according to at least one predetermined law for control of the flight surface controlled by the actuator. Each actuator comprises at least two logic units adapted for receiving commands originating from all the computers, each logic unit being adapted for: comparing the commands received between them, and according to the result of the comparison, choosing in accordance with a predetermined logic common to all the actuators, a computer, referred to as master computer, whose control command is validated for execution by the actuator considered; and transmitting, to all the computers, a master computer choice information item; and in that each computer is adapted for self-determining as being a master computer or otherwise as being a computer referred to as slave, on the basis of master computer choice information items received from all the actuators, a sole master computer among all the computers finally being determined.

US9195232 describes methods and systems for compensating for common failures in fail operational systems. An example system may include a primary controller configured to perform functions of a vehicle such as propulsion braking and steering and a secondary controller configured in a redundant configuration with the primary controller. The controllers may perform cross-checks of each other and may each perform internal self-checks as well. Additionally the system may include a control module configured to transfer control of the vehicle between the controllers based on detecting a fault. The control module may detect a common fault of the controllers that causes the control module to output a common fault signal. In response the system may transfer of control to a safety controller configured to perform the vehicle functions until the system may transfer control back to the primary controller.

US20160009257 describes that a system includes an autonomous sub-system that includes first and second braking modules. Each of the modules includes a processor and a memory the memory storing instructions executable by the processor for detecting a fault. The system further includes a brake sub-system programmed to actuate a brake mechanism in response to a signal from the second braking module. The autonomous sub-system is further programmed to select one of the braking modules to provide a signal to the brake mechanism depending on whether a fault is detected.

However, there is a need to provide a means to identify a master-slave relationship role of controllers for commanded components.

### SUMMARY OF THE INVENTION

Therefore, it would be advantageous to have an improved technology to identify a master-slave relationship role of controllers for commanded components.

The object of the present invention is solved with the subject matter of the independent claims, wherein further embodiments are incorporated in the dependent claims. It should be noted that the following described aspects of the invention apply also for the control architecture for a vehicle and the control method for a control architecture of a vehicle.

In a first aspect, there is provided a control architecture for a vehicle as defined in appended claim 1.

In a second aspect, there is provided a control method for a control architecture of a vehicle as defined in appended claim 7.

The invention and its scope of protection is defined in the above reference independent claims. The following examples of the disclosure provide the skilled person with an exemplary understandings of how certain described features can be combined one with the other.

In a first example of the disclosure, there is provided a control architecture for a vehicle, as defined in claim 1.

In this way, a mechanism is provided to identify master-slave roles of controllers for commanded components, within a redundant control architecture, through signalling of appropriate transmitted information, such as wake up timing information.

Thus, even if only one controller is able to transmit it can be determined to be the master controller.

In this manner, master-slave role of the controllers can be signalized for the commanded components by a dedicated wake up line information from each controller.

According to the invention, the at least one signal comprises a trigger signal.

In an example, the at least one signal comprises a wake up signal.

Thus, upon system start-up the master-slave roles of controllers can be determined.

According to the invention, the at least one signal comprises at least two signals transmitted from at least two controllers of the plurality of controllers. The controller of the at least two controllers from which a signal is received first is determined as the master controller.

In this way, a simple manner is provided by which commanded components can determine which controller is the master controller, on the basis of a signal being received from this controller before signals being received (which may not need to be received) from other controllers. This also provides a simple manner in which a controller of the plurality of controllers can be selected to be the master controller, in that this controller will send its signal first.

Thus, the master-slave role of the controllers can be signalized on wake up lines by a trigger event at start up in such a way that the controller by which the trigger event is sent the first time is determined as master.

In an example, the at least one signal comprises a signal transmitted from a controller other than a previously determined master controller.

In other words, the master-slave role can be changed during the operation through is signalling by a new trigger event on the wake up line from the slave controller, that then becomes the master controller.

In an example, the at least one signal comprises a signal transmitter from a previously determined controller.

In other words, the master-slave role change during the operation can be overridden by the so far determined master controller issuing a new trigger event on the wake up line.

In an example, the plurality of controllers are communicatively connected together, and wherein a controller of the plurality of controllers is selected as the master controller.

In an example, the controller selected as the master controller is configured to transmit a signal to the plurality of commanded components before the other controllers of the plurality of controllers transmit signals to the plurality of commanded components.

This provides a simple manner in which a controller of the plurality of controllers can be selected to be the master controller, in that this controller will send its signal first. However, because the other controllers also send their signals, if for some reason a controller selected to be master controller has a fault or there is a fault on the connection between it and the commanded components, another controller will be automatically determined by the commanded components as the master controller. This is because those commanded components will first receive a message from this controller that is then determined to be the master controller thereby providing for effective redundancy.

In a second example of the disclosure, there is provided a control method for a control architecture of a vehicle, as defined in claim 7.

In this manner, a method is provided to determine the master-slave role of controllers for lower level commanded components (even if they are identical in HW and SW). The method is based on the each controller having a communication line to each of the commanded components, that can be a dedicated wake-up line towards the commanded components, and the master-slave role can be determined according to the wake-up time sequence of controllers.

According to the invention, step b) comprises transmitting at least two signals transmitted from at least two controllers of the plurality of controllers, and determining the controller of the at least two controllers from which a signal is received first as the master controller.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of an example of a control architecture for a vehicle; and
Fig. 2 shows a control method for a control architecture of a vehicle.

### DETAILED DESCRIPTION OF EMBODIMENTS

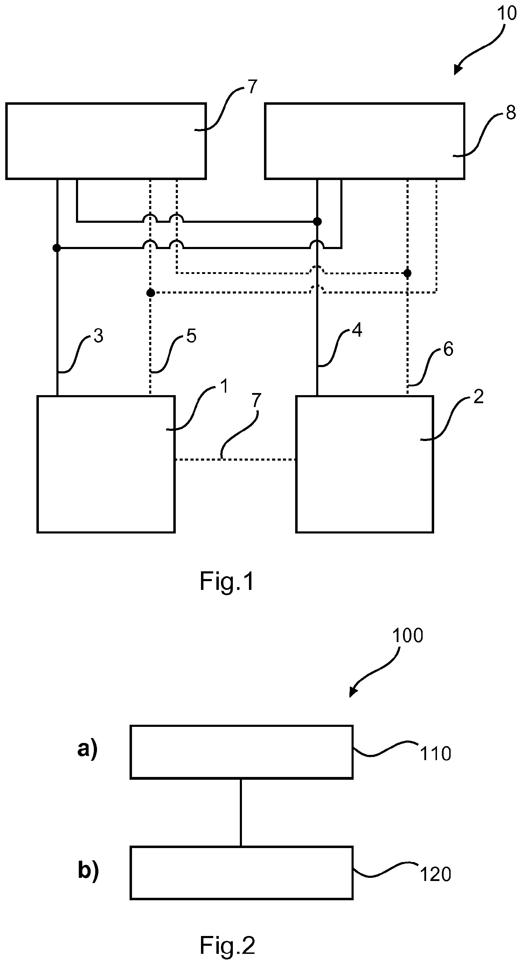

Fig. 1 shows an example of a control architecture 10 for a vehicle. The control architecture 10 comprises a plurality of controllers 1, 2, and a plurality of commanded components 7, 8. Each of the plurality of controllers is communicatively connected 3, 4, 5, 6 to all of the plurality of commanded components. This can be via wired or wireless communication. Each of the plurality of controllers is configured to send commands to be executed by one or more of the plurality of commanded components. Each of the plurality of commanded components is configured to determine that one of the plurality of controllers is a master controller on the basis of at least one signal transmitted from at least one of the plurality of controllers to the plurality of commanded components.

In an example, each controller is communicatively connected to each commanded component through a dedicated wake-up line.

In an example, each controller is communicatively connected to each commanded component through a communication line.

In an example, the plurality of commanded components are configured to execute commands sent to them by the determined master controller.

According to the invention, the at least one signal comprises a trigger signal.

According to an example, the at least one signal comprises a wake up signal.

In an example, a signal transmitted can be a trigger signal that is a combination of a wake up line state change transmitted over a wake-up line and additional information sent over a corresponding communication line.

According to the invention, the at least one signal comprises at least two signals transmitted from at least two controllers of the plurality of controllers. The controller of the at least two controllers from which a signal is received first is determined as the master controller.

According to an example, the at least one signal comprises a signal transmitted from a controller other than a previously determined master controller.

According to an example, the at least one signal comprises a signal transmitter from a previously determined controller.

According to an example, the plurality of controllers are communicatively connected together, and wherein a controller of the plurality of controllers is selected as the master controller.

In an example, the master slave role of the controller is decided within the controllers using appropriate algorithms, that can be aligned via the connection between the controllers.

In an example, the plurality of controllers are configured to wake up through receipt of an appropriate signal, that for example can be triggered by the ignition line of the vehicle.

According to an example, the controller selected as the master controller is configured to transmit a signal to the plurality of commanded components before the other controllers of the plurality of controllers transmit signals to the plurality of commanded components.

Fig. 2 shows a control method 100 for a control architecture of a vehicle in its basic steps. The method comprises:
in a connecting step 110, also referred to as step a), communicatively connecting each of a plurality of controllers 1, 2 to all of a plurality of commanded components 7, 8. Each of the plurality of controllers is configured to send commands to be executed by one or more of the plurality of commanded components;
in a determining step 120, also referred to as step b), determining by each of the plurality of commanded components that one of the plurality of controllers is a master controller on the basis of at least one signal transmitted from at least one of the plurality of controllers to the plurality of commanded components.

According to the invention, the at least one signal comprises a trigger signal.

In an example, the at least one signal comprises a wake up signal.

According to the invention, step b) comprises transmitting at least two signals transmitted from at least two controllers of the plurality of controllers, and determining the controller of the at least two controllers from which a signal is received first as the master controller.

In an example, the at least one signal comprises a signal transmitted from a controller other than a previously determined master controller.

In an example, the at least one signal comprises a signal transmitter from a previously determined controller.

In an example, the plurality of controllers are communicatively connected together, and wherein a controller of the plurality of controllers is selected as the master controller.

In an example, the controller selected as the master controller is configured to transmit a signal to the plurality of commanded components before the other controllers of the plurality of controllers transmit signals to the plurality of commanded components.

A detailed example is now described, again using Fig. 1. In this detailed example, a redundant controller architecture is shown, with at least two controllers (which can microcontrollers or complete ECUs) 1, 2 with dedicated wake-up lines 3, 4, which are connected to commanded components 7, 8. The controllers also have dedicated communication lines 5, 6 towards the commanded components and there is an interlink communication 7 between the controllers. The commanded components access both wake up lines 3 and 4 as well as both communication lines 5 and 6 at the same time, to be able to be commanded by any of the controllers 1 or 2 if the master role changes.

When the system is started, first the controllers 1 and 2 are triggered to wake up, e.g. by the ignition line of the vehicle. The master-slave role between controllers 1 and 2 is determined during the initialization phase by appropriate algorithms, which can be aligned through the interlink line 7. Then, the commanded components are triggered to wake up using the wake up lines 3 and 4. Each controller is triggering its wake up line towards the commanded components in the timing order according to its priority level (i.e. master first, slave second). The triggering on the wake up line can be signalized by an appropriate state change, which is complex enough that it cannot be produced by a controller in malfunction (e.g. sequence of state changes with specified timing). The commanded component is listening to the wake up lines in parallel and the master is identified by the wake up line that is triggered the first time - i.e. the line on which a signal is first received. In case the master-slave role needs to be changed (in case of failure of the other controller) then the slave controller can issue a new wake up trigger. In such a case, if the master in not inhibiting role change by another wake up trigger then the slave takes over the master role. If only one controller was able to start up at ignition, then in this case only the corresponding wake up line is triggered (no slave trigger) and the associated controller is determined to be the master controller. Alternatively, the trigger signal can be a combination of a wake up line state change and additional information sent to the corresponding communication line. The commanded component can then execute the commands sent over the communication line of the master 5 or 6.

While the invention has been illustrated and described in detail in the drawings and foregoing description, such illustration and description are to be considered illustrative or exemplary and not restrictive. The invention is set out in the appended set of claims.

In the claims, the word "comprising" does not exclude other elements or steps, and the indefinite article "a" or "an" does not exclude a plurality. Any reference signs in the claims should not be construed as limiting the scope.

### LIST OF REFERENCE NUMBERS

- 10: An control architecture for a vehicle;
- 1, 2: Controllers;
- 3, 4: Wake-up lines;
- 5, 6: Communication lines;
- 7, 8: Commanded components;
- 100: A control method for a control architecture of a vehicle;
- 110: Communicatively connecting each of the controllers to all of the commanded components;
- 120: Determining by each of the plurality of commanded components that one of the plurality of controllers is a master controller.

## Claims

1. A control architecture (10) for a vehicle, the control architecture comprising:
- a plurality of controllers (1, 2); and
- a plurality of commanded components (7, 8);
wherein, each of the plurality of controllers is communicatively (3, 4, 5, 6) connected to all of the plurality of commanded components;
wherein, each of the plurality of controllers is configured to send commands to be executed by one or more of the plurality of commanded components;
**characterised in that**:
each of the plurality of commanded components is configured to determine that one of the plurality of controllers is a master controller on the basis of at least one signal transmitted from at least one of the plurality of controllers to the plurality of commanded components, and wherein the at least one signal comprises a trigger signal; and
wherein the at least one signal comprises at least two signals transmitted from at least two controllers of the plurality of controllers, and wherein the controller of the at least two controllers from which a signal is received first is determined as the master controller.

2. Control architecture according to claim 1, further **characterised in that** the at least one signal comprises a wake up signal.

3. Control architecture according to any of claims 1-2, further **characterised in that** the at least one signal comprises a signal transmitted from a controller of the plurality of controllers other than a previously determined master controller.

4. Control architecture according to claim 3, further **characterised in that** the at least one signal comprises a signal transmitted from the previously determined master controller.

5. Control architecture according to any of claims 1-4, further **characterised in that** the plurality of controllers are communicatively connected (7) together, and wherein a controller of the plurality of controllers is selected as the master controller.

6. Control architecture according to claim 5, further **characterised in that** the controller selected as the master controller is configured to transmit a signal to the plurality of commanded components before the other controllers of the plurality of controllers transmit signals to the plurality of commanded components.

7. A control method (100) for a control architecture of a vehicle, the method comprising:
a) communicatively connecting (110) each of a plurality of controllers (1, 2) to all of a plurality of commanded components (7, 8), wherein, each of the plurality of controllers is configured to send commands to be executed by one or more of the plurality of commanded components;
**characterised in that**, the method comprises:
b) determining (120) by each of the plurality of commanded components that one of the plurality of controllers is a master controller on the basis of at least one signal transmitted from at least one of the plurality of controllers to the plurality of commanded components, and wherein the at least one signal comprises a trigger signal, and
wherein step b) comprises transmitting at least two signals transmitted from at least two controllers of the plurality of controllers, and determining the controller of the at least two controllers from which a signal is received first as the master controller.

## Patentansprüche

1. Steuerungsarchitektur (10) für ein Fahrzeug, wobei die Steuerungsarchitektur umfasst:
- mehrere Controller (1, 2); und
- mehrere befohlene Komponenten (7, 8);
wobei jeder der mehreren Controller kommunikativ (3, 4, 5, 6) mit allen der mehreren befohlenen Komponenten verbunden ist;
wobei jeder der mehreren Controller konfiguriert ist zum Senden von Befehlen zur Ausführung durch eine oder mehrere der mehreren befohlenen Komponenten;
**dadurch gekennzeichnet, dass**:
jede der mehreren befohlenen Komponenten konfiguriert ist zum Bestimmen, dass einer der mehreren Controller ein Master-Controller ist, auf Basis von mindestens einem von mindestens einem der mehreren Controller zu den mehreren befohlenen Komponenten übertragenen Signal und wobei das mindestens eine Signal ein Auslösersignal umfasst; und
wobei das mindestens eine Signal mindestens zwei von mindestens zwei Controllern der mehreren Controller übertragene Signale umfasst und wobei der Controller der mindestens zwei Controller, von dem ein Signal zuerst empfangen wird, als der Master-Controller bestimmt wird.

2. Steuerungsarchitektur nach Anspruch 1, weiter **dadurch gekennzeichnet, dass** das mindestens eine Signal ein Aufwachsignal umfasst.

3. Steuerungsarchitektur nach einem der Ansprüche 1-2, weiter **dadurch gekennzeichnet, dass** das mindestens eine Signal ein von einem Controller der mehreren Controller außer einem zuvor bestimmten Master-Controller übertragenes Signal umfasst.

4. Steuerungsarchitektur nach Anspruch 3, weiter **dadurch gekennzeichnet, dass** das mindestens eine Signal ein von dem zuvor bestimmten Master-Controller übertragenes Signal umfasst.

5. Steuerungsarchitektur nach einem der Ansprüche 1-4, weiter **dadurch gekennzeichnet, dass** die mehreren Controller kommunikativ miteinander verbunden (7) sind und wobei ein Controller der mehreren Controller als der Master-Controller gewählt wird.

6. Steuerungsarchitektur nach Anspruch 5, weiter **dadurch gekennzeichnet, dass** der als der Master-Controller gewählte Controller konfiguriert ist zum Übertragen eines Signals zu den mehreren befohlenen Komponenten, bevor die anderen Controller der mehreren Controller Signale zu den mehreren befohlenen Komponenten übertragen.

7. Steuerungsverfahren (100) für eine Steuerungsarchitektur eines Fahrzeugs, wobei das Verfahren umfasst:
a) kommunikatives Verbinden (110) jedes von mehreren Controllern (1, 2) mit allen von mehreren befohlenen Komponenten (7, 8), wobei jeder der mehreren Controller konfiguriert ist zum Senden von Befehlen zur Ausführung durch eine oder mehrere der mehreren befohlenen Komponenten;
**dadurch gekennzeichnet, dass** das Verfahren umfasst:
b) Bestimmen (120) durch jede der mehreren befohlenen Komponenten, dass einer der mehreren Controller ein Master-Controller ist, auf Basis von mindestens einem von mindestens einem der mehreren Controller zu den mehreren befohlenen Komponenten übertragenen Signal, und wobei das mindestens eine Signal ein Auslösersignal umfasst, und
wobei Schritt b) das Übertragen von mindestens zwei von mindestens zwei Controllern der mehreren Controller übertragenen Signalen und das Bestimmen des Controllers der mindestens zwei Controller, von dem ein Signal zuerst empfangen wird, als der Master-Controller umfasst.

## Revendications

1. Architecture (10) de commande d'un véhicule, l'architecture de commande comprenant :
- une pluralité d'unités (1, 2) de commande ; et
- une pluralité de composants (7, 8) recevant des instructions ;
dans laquelle chacune de la pluralité d'unités de commande communique (3, 4, 5, 6) avec tous les composants de la pluralité de composants recevant des instructions ;
dans laquelle chacune de la pluralité d'unités de commande est configurée pour envoyer des instructions à exécuter par un ou plusieurs de la pluralité de composants recevant des instructions ;
**caractérisée en ce que** :
chacun de la pluralité de composants recevant des instructions est configuré pour déterminer que l'une de la pluralité d'unités de commande est une unité de commande maître, sur la base d'au moins un signal transmis d'au moins l'une de la pluralité d'unités de commande à la pluralité de composants recevant des instructions, et dans laquelle le au moins un signal comprend un signal de déclenchement ; et
dans laquelle le au moins un signal comprend au moins deux signaux transmis d'au moins deux unités de commande de la pluralité d'unités de commande, et dans laquelle l'unité de commande de la au moins deux unités de commande, de laquelle un signal est reçu en premier est déterminée comme l'unité de commande maître.

2. Architecture de commande suivant la revendication 1, **caractérisée en outre en ce que** le au moins un signal comprend un signal de réveil.

3. Architecture de commande suivant l'une quelconque des revendications 1 à 2, **caractérisée en outre en ce que** le au moins un signal comprend un signal transmis d'une unité de commande de la pluralité d'unités de commande autre qu'une unité de commande maître déterminée précédemment.

4. Architecture de commande suivant la revendication 3, **caractérisée en outre en ce que** le au moins un signal comprend un signal transmis de l'unité de commande maître déterminée précédemment.

5. Architecture de commande suivant l'une quelconque des revendications 1 à 4, **caractérisée en outre en ce que** la pluralité d'unités de commande communiquent (7) ensemble, et dans laquelle une unité de commande de la pluralité d'unités de commande est sélectionnée comme unité de commande maître.

6. Architecture de commande suivant la revendication 5, **caractérisée en outre en ce que** l'unité de commande sélectionnée comme unité de commande maître est configurée pour transmettre un signal à la pluralité de composants recevant des instructions, avant que les autres unités de commande de la pluralité d'unités de commande transmettent des signaux à la pluralité de composants recevant des instructions.

7. Procédé (100) de commande d'une architecture de commande d'un véhicule, procédé dans lequel :
a) on fait communiquer (110) chacune de la pluralité d'unités (1, 2) de commande avec tous les composants de la pluralité de composants (7, 8) recevant des instructions, chacune de la pluralité d'unités de commande étant configurée pour envoyer des instructions à exécuter par un ou par plusieurs de la pluralité de composants recevant des instructions ;
**caractérisé en ce que** le procédé comprend :
b) déterminer (120) par chacun de la pluralité de composants recevant des instructions que l'une de la pluralité d'unités de commande est une unité de commande maître, sur la base d'au moins un signal transmis d'au moins l'une de la pluralité d'unités de commande à la pluralité de composants recevant des instructions, et dans laquelle le au moins un signal comprend un signal de déclenchement, et
dans lequel le stade b) comprend transmettre au moins deux signaux transmis d'au moins deux unités de commande de la pluralité d'unités de commande et déterminer l'unité de commande des au moins deux unités de commande, de laquelle un signal est reçu en premier comme unité de commande maître.
